(19) Europäisches Patentamt
European Patent Office
Office européen des brevets

(11) **EP 2 784 278 A1**

(12) **EUROPEAN PATENT APPLICATION**
published in accordance with Art. 153(4) EPC

(43) Date of publication:
**01.10.2014 Bulletin 2014/40**

(51) Int Cl.:
*F01N 3/023* (2006.01)          *F02D 45/00* (2006.01)
*B01D 46/42* (2006.01)

(21) Application number: **12852131.7**

(22) Date of filing: **23.10.2012**

(86) International application number:
**PCT/JP2012/077358**

(87) International publication number:
**WO 2013/077130 (30.05.2013 Gazette 2013/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2011 JP 2011254925**

(71) Applicant: **Hitachi Construction Machinery Co., Ltd.**
**Bunkyo-ku**
**Tokyo 112-8563 (JP)**

(72) Inventors:
• **NOGUCHI, Shuuhei**
**Tsuchiura-shi**
**Ibaraki 300-0013 (JP)**
• **ISHII, Hajime**
**Tsuchiura-shi**
**Ibaraki 300-0013 (JP)**
• **YOSHIDA, Hajime**
**Tsuchiura-shi**
**Ibaraki 300-0013 (JP)**

(74) Representative: **MERH-IP**
**Matias Erny Reichl Hoffmann**
**Paul-Heyse-Strasse 29**
**80336 München (DE)**

(54) **CONSTRUCTION MACHINE**

(57)     A regeneration device (22) performs regeneration of a filter (21) by burning particulate matter trapped by the filter (21) of an exhaust gas purifying device (18). The regeneration device (22) is configured to perform two types of processing, that is, automatic regeneration processing for automatically performing regeneration not on the basis of an operation by an operator and manual regeneration processing for performing regeneration by notifying an operator to manually perform the regeneration and by performing the regeneration on the basis of an operation by the operator. The automatic regeneration processing makes determination on whether or not to perform regeneration on the basis of an estimated trapping amount (H) estimated from an engine rotational speed (N) and a fuel injection quantity (F). The manual regeneration processing makes determination on whether or not to notify the operator on the basis of a differential pressure (ΔP) of the particulate matter removing filter (21).

Fig.5

## Description

TECHNICAL FIELD

The present invention relates to a construction machine provided with an exhaust gas purifying device suitably used for removing harmful substances from an exhaust gas of a diesel engine and the like, for example.

BACKGROUND ART

In general, a construction machine such as a hydraulic excavator, a hydraulic crane and the like is composed of an automotive lower traveling structure, an upper revolving structure rotatably mounted on the lower traveling structure, and a working mechanism tiltably provided on the front side of the upper revolving structure. The upper revolving structure has an engine for driving a hydraulic pump mounted on a rear part of a revolving frame and has a cab, a fuel tank, an operating oil tank and the like mounted on a front side of the revolving frame.

Here, for the engine as a prime mover of the construction machine, a diesel engine is generally used. In the exhaust gas exhausted from such diesel engine may contain harmful substances such as particulate matter (PM), nitrogen oxides (NOx) and the like, for example. Thus, an exhaust gas purifying device is provided in an exhaust pipe forming an exhaust gas passage of the engine.

The exhaust gas purifying device includes an oxidation catalyst (Diesel Oxidation Catalyst or abbreviated as DOC, for example) for oxidizing and removing nitrogen monoxide (NO), carbon monoxide (CO), hydrocarbon (HC) and the like contained in the exhaust gas and a particulate matter removing filter (Diesel Particulate Filter or abbreviated as DPF, for example) arranged on a downstream side of the oxidation catalyst and trapping and removing the particulate matter in the exhaust gas (Patent Document 1).

In the particulate matter removing filter, particulate matter deposited on the filter as the particulate matter is caught, by which the filter is clogged. Thus, it is necessary to regenerate the filter by removing the particulate matter from the filter when a certain amount of the particulate matter has been caught. The regeneration of the filter can be accomplished by raising a temperature of the exhaust gas by fuel injection for regeneration called post-injection and by burning the particulate matter deposited on the filter, for example.

On the other hand, if regeneration is performed in a state in which the particulate matter excessively deposits on the filter, the temperature of the exhaust gas excessively rises (a burning temperature of the particulate matter becomes excessively high), and there is a concern that the filter erodes. Thus, according to the conventional art, a trapping amount of the particulate matter trapped by the filter is estimated, and the regeneration is configured to be performed before the estimated trapping amount becomes excessive.

More specifically, a generation amount of the particulate matter generated from the engine is estimated from a rotational speed of the engine, a fuel injection quantity or the like, and regeneration is configured to be performed when the estimated amount reaches a threshold value set in advance (Patent Document 2).

Moreover, according to another conventional art, determination on whether the regeneration is to be started or not (clogging determination) is configured to be made on the basis of a pressure on an inlet side of the filter if the engine is operated at a high load, while the determination is made on the basis of a ratio of pressures between the inlet side and an outlet side (pressure ratio) of the filter if the engine is operated at a low to medium load (Patent Document 3).

Moreover, Patent Document 4 and Patent Document 5 also disclose technologies relating to the generation of the filter.

PRIOR ART DOCUMENT

PATENT DOCUMENT

Patent Document 1: Japanese Patent Laid-Open No. 2010-65577 A

Patent Document 2: Japanese Patent Laid-Open No. Hei 11-13455 A

Patent Document 3: Japanese Patent Laid-Open No. 2002-332824 A

Patent Document 4: Japanese Patent Laid-Open No. Hei 9-280036 A

Patent Document 5: Japanese Patent Laid-Open No. Hei 7-11935 A

SUMMARY OF THE INVENTION

According to the conventional art in Patent Document 2, correspondence among the rotational speed of the engine, the fuel injection quantity, and the generation amount of the particulate matter is prepared in advance as a map, and an amount of the particulate matter trapped by the filter (trapping amount) is estimated by using this map. In this case, in a transitional operation state in which a load is suddenly applied to the engine from an idling state for example, or even in an operation state in which a high load and a low load are repeatedly applied rapidly, the trapping amount should be estimated with accuracy. For this purpose, complicated calculation considering operation conditions such as an engine load, a temperature of the exhaust gas (exhaust temperature) and the like are needed.

On the other hand, in order to prevent erosion of the filter during the regeneration, such configuration is necessary that the regeneration can be performed before the particulate matter excessively deposits on the filter even if the estimated trapping amount (estimated trapping amount) is estimated smaller than a trapping amount actually trapped by the filter (actual trapping amount). For that purpose, a threshold value (determination value) for determining whether or not the regeneration is to be performed needs to be set to a smaller value allowing for a margin.

That is, it is concerned that an error of the estimated trapping amount with respect to the actual trapping amount becomes larger due to the transitional operation state. Thus, the threshold value of the trapping amount for determining whether or not the regeneration is to be performed needs to be set sufficiently smaller than an erosion boundary value which is a boundary at which the filter erodes if the regeneration is performed (a margin between the erosion boundary value and the threshold value is ensured large). In this case, there is a problem that a frequency of the regeneration increases, and fuel efficiency deteriorates.

According to the conventional art in Patent Document 3, determination on whether or not the regeneration is to be started is configured to be made on the basis of the pressure on the inlet side and the pressure on the outlet side of the filter. In the case of this configuration, since the determination on whether or not to perform regeneration is made by using only the pressure of the filter, a threshold value for making the determination needs to be set to a small value for allowing a margin. That is, in the case of the conventional art in Patent Document 3, too, the threshold value for making the determination on whether or not to perform the regeneration needs to be set sufficiently smaller than the erosion boundary value, and there is a problem that a frequency of the regeneration increases, and fuel efficiency deteriorates.

On the other hand, the trapping amount of the particulate matter trapped by the filter is estimated from a differential pressure between the pressure on the inlet side and the pressure on the outlet side of the filter, and the determination on whether or not to perform regeneration can be configured to be made on the basis of the estimated trapping amount. However, in the case of the configuration in which the trapping amount is estimated on the basis of the differential pressure of the filter, an influence of a substance other than the particulate matter deposited on the filter can be easily given.

That is, not only the particulate matter burned and removed by the regeneration but also ash contained in an engine oil, a fuel and the like not burned/removed even by the regeneration are deposited on the filter. On the other hand, the differential pressure which is a pressure difference between the inlet side and the outlet side of the filter becomes larger as the amount of substance deposited on the filter increases without discrimination between the particulate matter and the ash.

Thus, in the case of the configuration in which the trapping amount is estimated on the basis of the differential pressure of the filter, if an amount of the ash deposited on the filter increases as an operation time elapses, it is concerned that, though an amount of the particulate matter actually trapped by the filter is small, determination is made that the estimated trapping amount has reached a threshold value and regeneration is performed. As a result, there is a concern that a frequency of regeneration increases, and fuel efficiency deteriorates.

Patent Document 4 and Patent Document 5 disclose a technology in which start of regeneration is determined by considering ash deposited on the filter, but calculation processing becomes complicated and moreover, it is concerned that sufficient accuracy cannot be ensured.

In view of the above-discussed problems with the conventional art, it is an object of the present invention to provide a construction machine which can regenerate a filter of the exhaust gas purifying device properly with a simple configuration.

(1) A construction machine according to the present invention is provided with a vehicle body which an operator gets on board; an engine mounted on the vehicle body; an exhaust gas purifying device having a filter provided on an exhaust side of the engine and trapping particulate matter in an exhaust gas exhausted from the engine; and a regeneration device for regenerating the filter by burning the particulate matter trapped by the filter.

In order to solve the above-mentioned problems, a characteristic of a configuration adopted by the present invention is that the regeneration device is provided with automatic regeneration determining unit for determining whether or not the regeneration is to be automatically performed and manual regeneration determining unit for determining whether or not notification is to be made to the operator to manually perform regeneration; the automatic regeneration determining unit estimates a trapping amount of the particulate matter trapped by the filter on the basis of at least a rotational speed of the engine and a fuel injection quantity and determines whether or not automatic regeneration is to be performed on the basis of whether the estimated trapping amount is at a trapping amount threshold value (T1) set in advance or more; and the manual regeneration determining unit determines whether or not a signal for notifying manual regeneration is to be outputted on the basis of whether a differential pressure ($\Delta P = P1 - P2$) which is a difference between a pressure (P1) on an inlet side and a pressure (P2) on an outlet side of the filter is at a differential pressure threshold value (T2) set in advance or more.

With this arrangement, the regeneration device for regenerating the filter is provided with two determining units which are the automatic regeneration determining unit and the manual regeneration determining unit. Thus, the filter can be regenerated stably by these two determining units. Specifically, even if the automatic regeneration on the basis of the determination of the automatic regeneration determining unit is not performed due to an error caused between the trapping amount of the particulate matter estimated by the automatic regeneration determining unit (estimated trapping amount) and an actual trapping amount (true trapping amount), notification can be made to the operator to perform manual regeneration by the manual regeneration determining unit. As a result, the regeneration of the filter can be stably performed by using two stage determining units which are the automatic regeneration determining unit and the manual regeneration determining unit, and stability and reliability of the regeneration device can be ensured.

As described above, since the manual regeneration determining unit can assist (aid) the automatic regeneration determining unit, a margin of the trapping amount threshold value (T1) used for the determination of the automatic regeneration determining unit can be set small. That is, even if the margin of the trapping amount threshold value (T1) is set small, notification can be made to the operator by the manual regeneration determining unit to perform the manual regeneration before the particulate matter is excessively deposited on the filter. As a result, even if the margin of the trapping amount threshold value (T1) is set small, erosion of the filter during the regeneration can be prevented.

Therefore, since the margin of the trapping amount threshold value (T1) used for the determination of the automatic regeneration determining unit can be set small, the automatic regeneration made on the basis of the determination of the automatic regeneration determining unit can be made at a proper time (at proper timing) in a state in which a proper amount of particulate matter is trapped by the filter. Thus, the automatic regeneration can be made stably, and an increase of a frequency of the regeneration and deterioration of fuel efficiency as in the conventional art can be suppressed. As a result, reliability and stability of the exhaust gas purifying device and fuel cost reduction of the construction machine can be realized.

Moreover, the automatic regeneration determining unit is configured to make determination on the basis of the estimated trapping amount estimated at least from the rotational speed of the engine and the fuel injection quantity, and the manual regeneration determining unit is configured to make determination on the basis of the differential pressure of the filter. Thus, neither of the determining units constituting the regeneration device need a complicated calculation but can be configured as simple determining unit, and the regeneration of the filter can be performed properly by a simple regeneration device.

It should be noted that ash contained in the engine oil, fuel and the like not burned or removed even by the regeneration is deposited on the filter, and a deposited amount of this ash increases with elapse of the operation time. Here, the manual regeneration determining unit can be affected by the deposition of the ash since it makes determination on the basis of a differential pressure of the filter. However, this manual regeneration determining unit does not make determination on whether or not to perform automatic regeneration, and thus, even if the deposited amount of the ash increases, a frequency of the automatic regeneration does not increase. On the other hand, the manual regeneration determining unit can set the margin for the erosion boundary value of the filter smaller than a margin for the erosion boundary value of the automatic regeneration determining unit. Thus, by setting the margin of the differential pressure threshold value (T2) small, even if the deposited amount of the ash increases, an increase of the frequency of the manual regeneration can be suppressed.

(2) According to the present invention, assuming that an erosion boundary value of an estimated trapping amount which becomes a boundary at which the filter erodes or not is a trapping amount boundary value (X), the trapping amount threshold value (T1) is set to a value smaller than the trapping amount boundary value (X) allowing for an error that can be caused between the estimated trapping amount and an actual trapping amount.

With this arrangement, since the trapping amount threshold value (T1) is set to a value smaller than the trapping amount boundary value (X), erosion of the filter during the automatic regeneration can be prevented. In this case, since the automatic regeneration determining unit can be assisted (aided) by the manual regeneration determining unit, the margin of the trapping amount threshold value (T1) to the trapping amount boundary value (X) (a difference between the trapping amount boundary value (X) and the trapping amount threshold value (T1)) can be set smaller than the conventional art. Thus, a frequency of the automatic regeneration can be reduced, and fuel efficiency can be improved.

(3) According to the present invention, assuming that an erosion boundary value of a differential pressure which becomes a boundary at which the filter erodes or not is a differential pressure boundary value (Y), the differential pressure threshold value (T2) is set to a value smaller than the differential pressure boundary value (Y) allowing for an error based on detection accuracy of a pressure sensor for obtaining the differential pressure.

With this arrangement, since the differential pressure threshold value (T2) is set to a value smaller than the differential pressure boundary value (Y), erosion of the filter during the manual regeneration can be prevented. In this case, the margin of the differential pressure threshold value (T2) to the differential pressure boundary value (Y) (a difference between the differential pressure boundary value (Y) and the differential pressure threshold value (T2)) is set on the basis of an error based on detection accuracy of the pressure sensor. Thus, as compared with the configuration in which the determination on whether or not to perform the automatic regeneration is made on the basis of the differential pressure or the configuration in which the trapping amount is estimated from the differential pressure, the margin can be set small. As a result, a frequency of the manual regeneration can be also reduced.

(4) According to the present invention, the regeneration device is configured to execute automatic regeneration processing by the automatic regeneration determining unit and manual regeneration processing by the manual regeneration determining unit in parallel. With this arrangement, determination on whether or not to perform regeneration is made independently in parallel in two systems by the two determining units. Therefore, even if the both margins of the trapping amount threshold value (T1) of the automatic regeneration determining unit and the differential pressure threshold value (T2) of the manual regeneration determining unit are set small, regeneration on the basis of either one of the determining units can be configured to be performed before the particulate filter is excessively deposited on the filter. As a result, setting of the both margins of the trapping amount threshold value (T1) and the differential pressure threshold value (T2) small and suppression of the erosion of the filter can be both realized at high level.

(5) According to the present invention, the automatic regeneration on the basis of the determination of the automatic regeneration determining unit is configured to burn the particulate matter by performing fuel injection for regeneration by a fuel injection device upon receipt of a signal outputted from the regeneration device; and the manual regeneration on the basis of the determination of the manual regeneration determining unit is configured to burn the particulate matter by performing fuel injection for regeneration by the fuel injection device upon receipt of a signal outputted from the regeneration device by an operation by the operator on the basis of an output of a signal notifying the manual regeneration. As a result, even if the automatic regeneration that should be performed on the basis of the determination of the automatic regeneration determining unit is not performed due to an error caused between the estimated trapping amount and the actual trapping amount, the manual regeneration can be performed stably.

(6) According to the present invention, the automatic regeneration on the basis of the determination of the automatic regeneration determining unit is configured to burn the particulate matter by driving at least either one of an intake throttle valve provided on an intake side of the engine and an exhaust throttle valve provided on an exhaust side in a direction of throttling a passage of the throttle valve upon receipt of the signal outputted from the regeneration device; and the manual regeneration on the basis of the determination of the manual regeneration determining unit is configured to burn the particulate matter by performing fuel injection for regeneration by a fuel injection device upon receipt of a signal outputted from the regeneration device by an operation by an operator on the basis of an output of a signal for notifying the manual regeneration.

BRIEF DESCRIPTION OF THE DRAWINGS

Fig. 1 is a front view showing a hydraulic excavator applied to a first embodiment of the present invention.

Fig. 2 is a partially broken plan view showing the hydraulic excavator in an enlarged manner in a state in which a part of a cab and an exterior cover in an upper revolving structure in Fig. 1 is removed.

Fig. 3 is a circuit configuration diagram showing an engine, an exhaust gas purifying device, a controller and the like.

Fig. 4 is a flow diagram showing regeneration processing of a particulate matter removing filter by a regeneration device.

Fig. 5 is a characteristic diagram showing an example of a time change in an estimated trapping amount and a differential pressure according to the first embodiment.

Fig. 6 is a characteristic diagram showing an example of a time change in the estimated trapping amount according to a first comparative example.

Fig. 7 is a characteristic diagram showing an example of a time change in the differential pressure according to a second comparative example.

Fig. 8 is a configuration diagram similar to Fig. 3 showing the engine, the exhaust gas purifying device and the like according to a second embodiment of the present invention.

MODE FOR CARRYING OUT THE INVENTION

Hereinafter, an embodiment of a construction machine according to the present invention will be in detail explained with reference to the accompanying drawings by taking a case in which the construction machine is applied to a small-sized hydraulic excavator called a mini-shovel as an example.

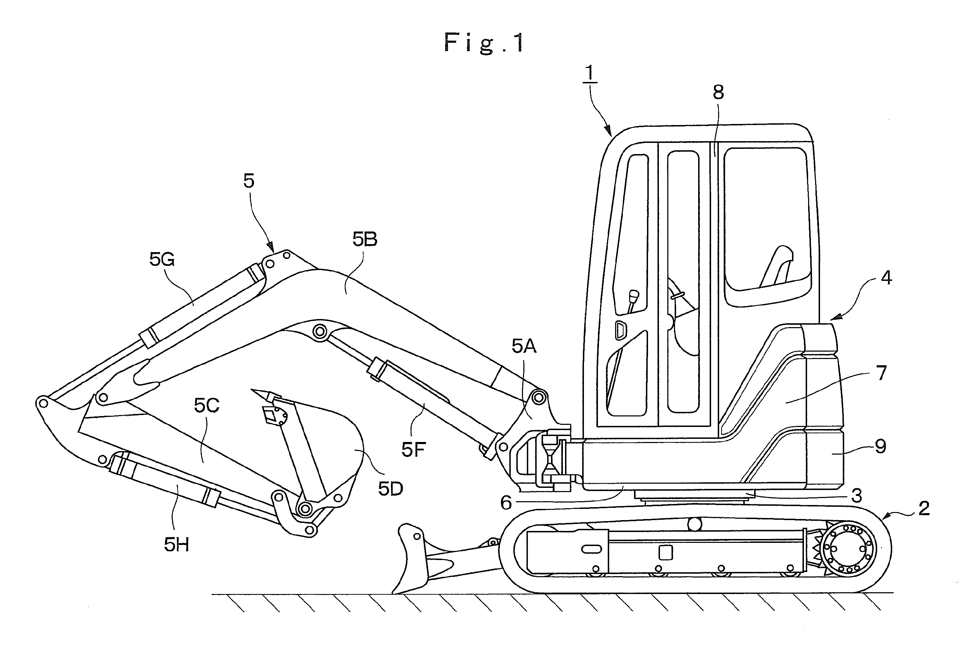

Figs. 1 to 5 show a first embodiment of the construction machine according to the present invention.

In the figures, designated at 1 is a small-sized hydraulic excavator used for an excavating work of earth and sand and the like. This hydraulic excavator 1 is largely constituted by an automotive crawler-type lower traveling structure 2, an upper revolving structure 4 rotatably mounted on the lower traveling structure 2 through a revolving device 3 and constituting a vehicle body together with the lower traveling structure 2, and a working mechanism 5 tiltably provided on a front side of the upper revolving structure 4.

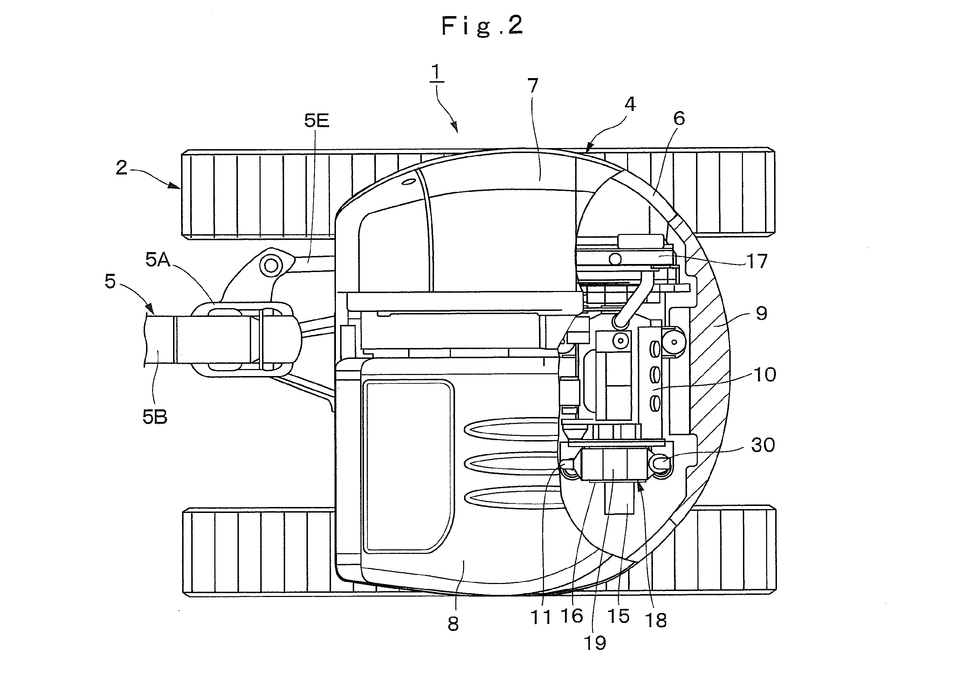

Here, the working mechanism 5 is composed as a swing-post type working mechanism and is provided with a swing post 5A, a boom 5B, an arm 5C, a bucket 5D as a working tool, a swing cylinder 5E (see, Fig. 2), a boom cylinder 5F, an arm cylinder 5G and a bucket cylinder 5H, for example. The upper revolving structure 4 is composed of a revolving frame 6, an exterior cover 7, a cab 8, a counterweight 9 and the like which will be described later.

The revolving frame 6 is mounted on the lower traveling structure 2 through the revolving device 3. In the revolving frame 6, the counterweight 9 and an engine 10 which will be described later are provided on its rear part side, and the cab 8 which will be described later is provided on a front left side. In the revolving frame 6, the exterior cover 7 is provided at a position between the cab 8 and the counterweight 9, and this exterior cover 7 defines a space accommodating the engine 10, a hydraulic pump 15, a heat exchanger 17, an exhaust gas purifying device 18 and the like therein together with the revolving frame 6, the cab 8, and the counterweight 9.

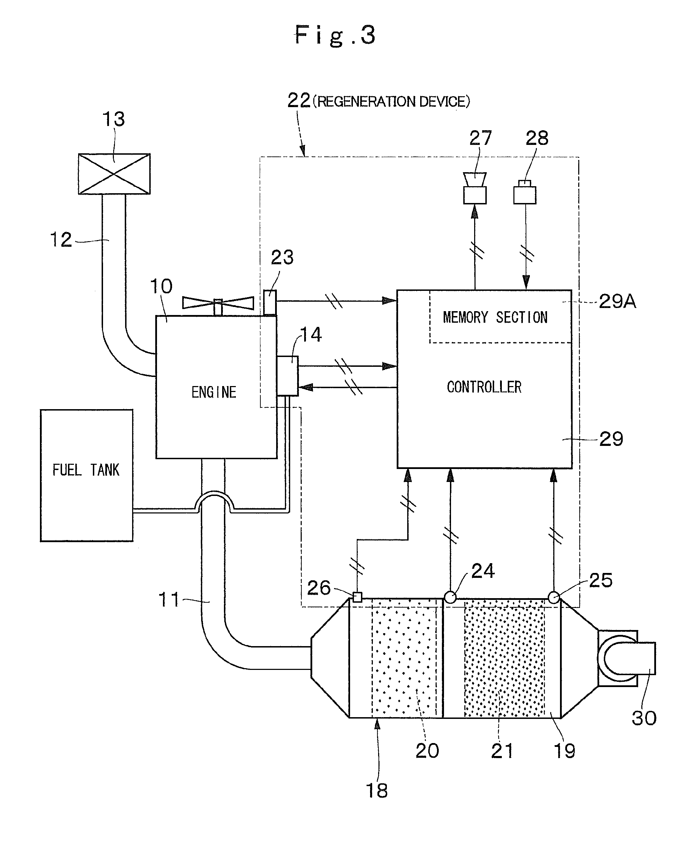

The cab 8 is mounted on a left front side of the revolving frame 6, and the cab 8 defines an operator's room therein on which the operator gets. Inside the cab 8, an operator's seat on which the operator is seated and various operation levers, an alarm 27, an operating switch 28 (see, Fig. 3 for all) and the like which will be described later are disposed.

The counterweight 9 constitutes a part of the upper revolving structure 4, and the counterweight 9 is located on the rear side of the engine 10 which will be described later and mounted on a rear end portion of the revolving frame 6 and is to take a weight balance with the working mechanism 5. As shown in Fig. 2, a rear surface side of the counterweight 9 is formed having an arc shape so that the counterweight 9 is constituted so as to be accommodated within a vehicle body width of the lower traveling structure 2.

Designated at 10 is the engine arranged in a laterally placed state on the rear side of the revolving frame 6, and since the engine 10 is mounted as a prime mover on the small-sized hydraulic excavator 1, the engine 10 is constituted by using a small-sized diesel engine, for example. As shown in Fig. 2, an exhaust pipe 11 constituting a part of an exhaust gas passage for exhausting an exhaust gas is provided on the left side of the engine 10. An exhaust gas purifying device 18 is connected and provided to the exhaust pipe 11. On the other hand, an intake pipe 12 (see, Fig. 3) for having an outside air (air) flow toward the engine 10 is provided on the intake side of the engine 10. An air cleaner 13 for purifying the outside air is connected to a tip end side of the intake pipe 12.

Here, the engine 10 is constituted by an electronically controlled engine, and a fuel supply amount is variably controlled by a fuel injection device 14 (see, Fig. 3) such as an electronically controlled injection valve or the like. That is, this fuel injection device 14 variably controls an injection quantity (a fuel injection quantity) of fuel to be injected into a cylinder (not shown) of the engine 10 on the basis of a control signal outputted from a controller 29 which will be described later.

Moreover, the fuel injection device 14 constitutes a regeneration device 22 together with the controller 29 and the like which will be described later, and the fuel injection device 14 performs fuel injection for regeneration (additional injection after a combustion stroke) called post-injection, for example, in accordance with a control signal of the controller 29. As a result, the temperature of the exhaust gas is raised, and the particulate matter deposited on a particulate matter removing filter 21 of the exhaust gas purifying device 18 which will be described later is burned and removed.

The hydraulic pump 15 is provided on the left side of the engine 10, and the hydraulic pump 15 constitutes a hydraulic pressure source together with an operating oil tank (not shown). The hydraulic pump 15 is constituted by a variable displacement type swash plate type, a bent axis type or a radial piston type hydraulic pump, for example. It should be noted that the hydraulic pump 15 is not necessarily limited to the variable displacement type hydraulic pump but may be constituted by using a fixed displacement type hydraulic pump, for example.

As shown in Fig. 2, the hydraulic pump 15 is mounted on the left side of the engine 10 through a power transmission device 16, and a rotational output of the engine 10 is transmitted by this power transmission device 16. The hydraulic pump 15 is to deliver a pressurized oil (operating oil) toward a control valve (not shown) by being driven by the engine 10.

A heat exchanger 17 is provided on the revolving frame 6 at a position on the right side of the engine 10, and this heat exchanger 17 includes a radiator, an oil cooler, and an intercooler, for example. That is, the heat exchanger 17 is to cool the engine 10 and is also to cool the pressurized oil (operating oil) to be returned to the operating oil tank.

Next, the exhaust gas purifying device 18 for purifying the exhaust gas exhausted from the engine 10 will be described.

Namely, designated at 18 is the exhaust gas purifying device provided on the exhaust side of the engine 10. As shown in Fig. 2, the exhaust gas purifying device 18 is disposed on the upper left side of the engine 10 at a position which becomes an upper side of the power transmission device 16, for example, and the exhaust pipe 11 of the engine 10 is connected to the upstream side thereof. The exhaust gas purifying device 18 constitutes an exhaust gas passage together with the exhaust pipe 11 and removes the harmful substance contained in this exhaust gas while the exhaust gas flows from the upstream side to the downstream side.

That is, the engine 10 composed of a diesel engine has high efficiency and excellent durability. However, the exhaust gas of the engine 10 contains harmful substances such as particulate matter (PM), nitrogen oxides (NOx), carbon monoxide (CO) and the like. Thus, as shown in Fig. 3, the exhaust gas purifying device 18 mounted on the exhaust pipe 11 includes an oxidation catalyst 20 which oxidizes and removes carbon monoxide (CO) and the like in the exhaust gas and will be described later and the particulate matter removing filter 21 which traps and removes the particulate matter (PM) in the exhaust gas and will be described later.

As shown in Fig. 3, the exhaust gas purifying device 18 has a cylindrical casing 19 constituted by detachably connecting a plurality of cylindrical bodies in the front and the rear sides, for example. In this casing 19, the oxidation catalyst 20 (Diesel Oxidation Catalyst or abbreviated as DOC, for example), the particulate matter removing filter 21 (Diesel Particulate Filter or abbreviated as DPF, for example) as a filter and the like are removably accommodated.

The oxidation catalyst 20 is formed of a cell-shaped cylindrical body made of ceramics and having an outer diameter dimension equal to an inner diameter dimension of the casing 19, for example. In the oxidation catalyst 20, a large number of through holes (not shown) are formed in the axial direction thereof, whose inner surface is coated with precious metal. The oxidation catalyst 20 makes the exhaust gas flow through each of the through holes at a predetermined temperature and oxidizes and removes carbon monoxide (CO), hydrocarbon (HC) and the like contained in the exhaust gas and removes nitrogen monoxides (NO) as nitrogen dioxides (NO2).

On the other hand, the particulate matter removing filter 21 is arranged on the downstream side of the oxidation catalyst 20 in the casing 19. The particulate matter removing filter 21 traps particulate matters (PM) in the exhaust gas exhausted from the engine 10 and burns and removes the trapped particulate matters so as to purify the exhaust gas. Thus, the particulate matter removing filter 21 is constituted by a cell-shaped cylindrical body in which a large number of small holes (not shown) are provided in the axial direction in a porous member made of a ceramics material, for example. As a result, the particulate matter removing filter 21 traps the particulate matters through the large number of small holes, and the trapped particulate matters are burned and removed by regeneration of the regeneration device 22 which will be described later. As a result, the particulate matter removing filter 21 is regenerated.

Designated at 22 is the regeneration device for regeneration the filter 21 by burning the particulate matter trapped by the particulate matter removing filter 21 of the exhaust gas purifying device 18. Here, the regeneration device 22 includes the aforementioned fuel injection device 14, a rotational sensor 23, pressure sensors 24 and 25, an exhaust gas temperature sensor 26, an alarm 27, an operating switch 28, and a controller 29 which will be described later. The regeneration device 22 has a function of burning and removing the particulate matter deposited on the particulate matter removing filter 21 by performing post-injection by the fuel injection device 14 in accordance with an instruction signal (control signal) of the controller 29.

Moreover, the regeneration device 22 is configured to execute two types of regeneration processing, that is, automatic regeneration processing for automatically executing regeneration on the basis of the determination of the controller 29, that is, not on the basis of an operation by the operator and manual regeneration processing for alarming the operator to perform manual regeneration on the basis of the determination of the controller 29 and executing regeneration on the basis of the operation by the operator.

The rotational sensor 23 is to detect a rotational speed (rotational number) of the engine 10, and the rotational sensor 23 detects the rotational speed of the engine 10 and outputs its detection signal to the controller 29 which will be described later. The controller 29 estimates a trapping amount of the particulate matter trapped by the particulate matter removing filter 21 on the basis of an engine rotational speed N detected by the rotational sensor 23, a fuel injection quantity F injected by the fuel injection device 14 and the like and determines whether or not the automatic regeneration is to be performed on the basis of the estimated trapping amount. It should be noted that the fuel injection quantity F can be acquired from an intake air amount detected by an airflow meter, not shown, provided on the intake side of the engine 10 and the engine rotational speed N, for example, and can be also calculated from a control signal (a fuel injection instruction) outputted from the controller 29 to the fuel injection device 14, for example.

The pressure sensors 24 and 25 are provided in the casing 19 of the exhaust gas purifying device 18. As shown in Fig. 3, the pressure sensors 24 and 25 are arranged on the inlet side (upstream side) and the outlet side (downstream side) of the particulate matter removing filter 21, separated away from each other, and outputs the respective detection signals to the controller 29 which will be described later. The controller 29 calculates a differential pressure $\Delta P$ from a pressure P1 on the inlet side detected by a pressure sensor 24 and a pressure P2 on the outlet side detected by a pressure sensor 25 and determines whether or not to perform manual regeneration on the basis of the differential pressure $\Delta P$.

The exhaust gas temperature sensor 26 is to detect a temperature of the exhaust gas (exhaust gas temperature). As shown in Fig. 3, the exhaust gas temperature sensor 26 is mounted on the casing 19 of the exhaust gas purifying device 18 and detects a temperature of the exhaust gas exhausted from the exhaust pipe 11 side, for example. The temperature detected by the exhaust gas temperature sensor 26 is outputted to the controller 29 which will be described later as a detection signal.

The alarm 27 is provided in the vicinity of the operator's seat in the cab 8. The alarm 27 is connected to the controller 29 and notifies the operator to perform the manual regeneration on the basis of an instruction (alarm signal) from the controller 29. Here, the alarm 27 can be constituted by a buzzer emitting an alarm sound, a speaker emitting a voice, a light or a monitor displaying contents to be notified and the like. The alarm 27 notifies the operator to perform the manual regeneration by emitting an alarm sound or an alarm display on the basis of the instruction (alarm signal) from the controller 29 in case the controller 29 determines that the manual regeneration should be performed.

The operating switch 28 is provided in the vicinity of the operator's seat in the cab 8. The operating switch 28 is connected to the controller 29 which will be described later and outputs a signal notifying the controller 29 that regeneration is to be performed on the basis of the operation by the operator. That is, if the operator operates the operating switch 28 upon notification by the alarm 27, a signal that the switch has been operated is outputted from the operating switch 28 to the controller 29. As a result, the controller 29 outputs an instruction (control signal) to the fuel injection device 14 to perform regeneration (post-injection), by which the regeneration (manual regeneration) is performed manually by the operator.

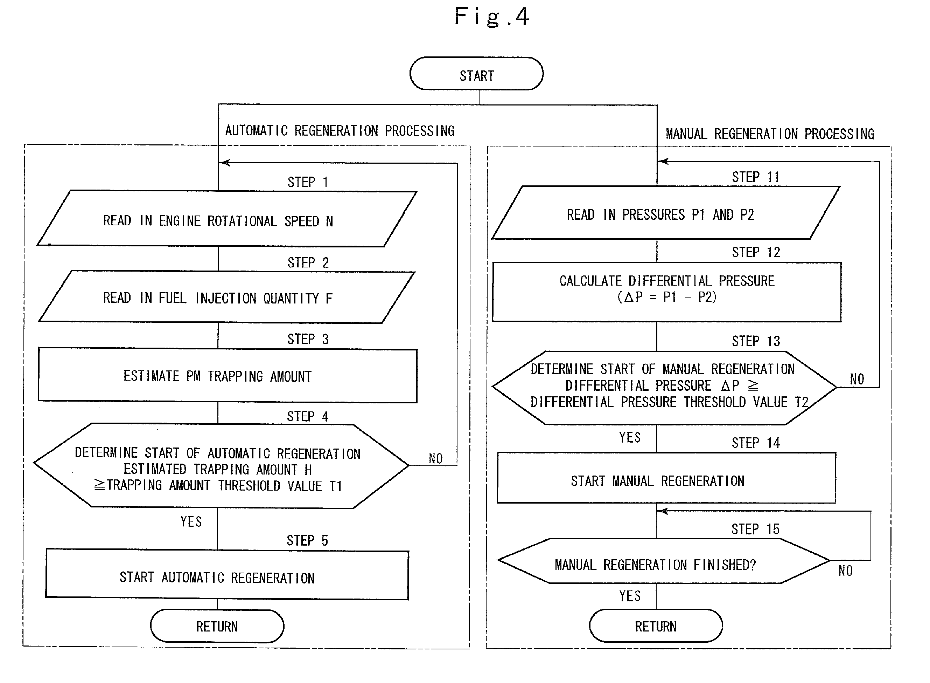

The controller 29 is constituted by a microcomputer, for example, and the controller 29 has its inlet side connected to the fuel injection device 14, the rotational sensor 23, the pressure sensors 24 and 25, the exhaust gas temperature sensor 26, the operating switch 28 and the like. An output side of the controller 29 is connected to the fuel injection device 14, the alarm 27 and the like. The controller 29 has a memory section 29A composed of a ROM, a RAM and the like, and this memory section 29A stores a processing program for regeneration processing shown in Fig. 4 which will be described later, a map and a calculation formula for estimating a trapping amount of the particulate matter prepared in advance, a trapping amount threshold value T1 set in advance, a differential pressure threshold value T2 and the like.

Here, the map for estimating the trapping amount is prepared as a map of correspondence among the engine rotational speed N, the fuel injection quantity F, and an emission amount of the particulate matter experimentally acquired in advance, for example. The calculation formula for estimating the trapping amount can be expressed as the following formula 1, assuming that the estimated trapping amount is H, the emission of the particulate matter acquired from the map is Hm, and an amount of the particulate matter (regeneration amount) removed from the particulate matter removing filter 21 by regeneration is J.

[Formula 1]

$$H = Hm - J$$

In this case, the amount of the particulate matter removed by the regeneration, that is, the regeneration amount J can be calculated from relationship among a flow rate of the exhaust gas acquired from the engine rotational speed N and the fuel injection quantity F, the exhaust gas temperature, and an $NO_2$ conversion rate acquired from the emission of the nitrogen oxide (NOx) acquired from the engine rotational speed N and the fuel injection quantity F considering the exhaust gas temperature. It should be noted that the exhaust gas temperature can be detected by the exhaust gas temperature sensor 26. The engine rotational speed N can be detected by the rotational sensor 23. The fuel injection quantity F can be calculated from the intake air amount detected by the air flow meter and the engine rotational speed N.

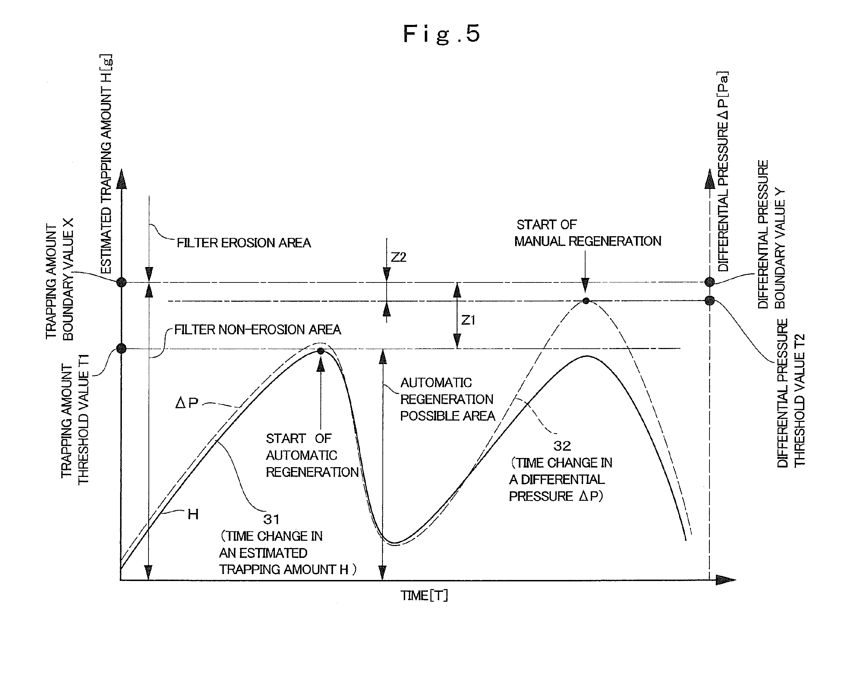

Subsequently, by referring to Fig. 5, the trapping amount threshold value T1 is a threshold value for determining whether or not automatic regeneration is to be performed. That is, the trapping amount threshold value T1 is a determining value for determining that the automatic regeneration is necessary when the estimated trapping amount H estimated from the map, the calculation formula or the like described above becomes the trapping amount threshold value T1 or more. In Fig. 5, assuming that an erosion boundary value of the estimated trapping amount H which is a boundary at which the particulate matter removing filter 21 erodes or not is a trapping amount boundary value X, the trapping amount threshold value T1 is set at a value smaller than the trapping amount boundary value X. Specifically, the trapping amount threshold value T1 is set to a value smaller than the trapping amount boundary value X allowing for an error that can be caused between the estimated trapping amount H and the actual trapping amount actually trapped by the particulate matter removing filter 21. In other words, the trapping amount threshold value T1 is set to a value given a margin Z1 with respect to the trapping amount boundary value X allowing for the above described error.

The differential pressure threshold value T2 is a threshold value for determining whether or not the manual regeneration is to be performed. That is, the differential pressure threshold value T2 is a determining value for determining that the manual regeneration is necessary when the differential pressure $\Delta P$ between the pressure P1 on the inlet side detected by the pressure sensor 24 and the pressure P2 on the outlet side detected by the pressure sensor 25 becomes the differential pressure threshold value T2 or more. In this case, the differential pressure $\Delta P$ is calculated from the following formula 2:

[Formula 2]

$$\Delta P = P1 - P2$$

As shown in Fig. 5, assuming that the erosion boundary value of the differential pressure $\Delta P$ which is a boundary at which the particulate matter removing filter 21 erodes is a differential pressure boundary value Y, the differential pressure threshold value T2 is set to a value smaller than this differential pressure boundary value Y. Specifically, the differential pressure threshold value T2 is set to a value smaller than the differential pressure boundary value Y allowing for an error based on detection accuracy of the pressure sensors 24 and 25 for detecting the differential pressure $\Delta P$. In other words, the differential pressure threshold value T2 is set to a value given a margin Z2 with respect to the differential pressure boundary value Y allowing for the above described error.

The controller 29 controls the automatic regeneration processing of automatically performing regeneration not on the basis of the operation by the operator and the manual regeneration processing of notifying the operator to manually perform regeneration and performing regeneration on the basis of the operation by the operator in accordance with the processing program in Fig. 4 which will be described later. That is, the controller 29 estimates a trapping amount of the particulate matter trapped by the particulate matter removing filter 21 by a detection signal from the rotational sensor 23 and the air flow meter (on the basis of the fuel injection quantity F and the engine rotational speed N) and determines whether or not to perform regeneration on the basis of whether or not the estimated trapping amount H is at the trapping amount threshold value T1 set in advance or more. Therefore, the controller 29 controls the automatic regeneration processing of automatically performing regeneration not through the operation by the operator when the estimated trapping amount H is at the trapping amount threshold value T1 or more and it is determined that regeneration needs to be performed.

On the other hand, the controller 29 calculates the differential pressure $\Delta P$ of the particulate matter removing filter 21 by the detection signals of the pressure sensors 24 and 25 and determines whether or not notification is to be given to the operator to perform manual regeneration on the basis of whether the differential pressure $\Delta P$ is at the differential pressure threshold value T2 set in advance or more. That is, the controller 29 outputs a signal for notification (alarm signal) if the differential pressure $\Delta P$ is at the differential pressure threshold value T2 or more and it is determined that notification to the operator is necessary. As a result, the alarm 27 emits an alarm sound or makes an alarm display, the operator operates the operating switch 28, and the controller 29 controls the manual regeneration processing of performing regeneration on the condition of the operation by the operator.

It should be noted that a discharge port 30 is provided on the downstream side of the exhaust gas purifying device 18. As shown in Fig. 3, the discharge port 30 is located on the downstream side from the particulate matter removing filter 21 and is connected to the outlet side of the casing 19. This discharge port 30 includes a funnel for emitting the exhaust gas after purification processing into the air and a silencer, for example.

The hydraulic excavator 1 according to the first embodiment has the configuration as described above, and its operation will be described subsequently.

The operator of the hydraulic excavator 1 gets on the cab 8 of the upper revolving structure 4, starts the engine 10 and drives the hydraulic pump 15. As a result, the pressurized oil from the hydraulic pump 15 is supplied to various actuators through control valves. If the operator on board the cab 8 operates an operation lever for running, the lower traveling structure 2 can be advanced or retreated.

On the other hand, when the operator in the cab 8 operates an operation lever for work, the working mechanism 5 can be moved upward/downward and an excavating work of earth and sand can be performed. In this case, since the small-sized hydraulic excavator 1 has a small turning radius by the upper revolving structure 4, a side gutter excavating work or the like can be performed while turning/driving the upper revolving structure 4 even in a narrow work site such as in an urban area, for example.

During operation of the engine 10, the particulate matter or the like which is a harmful substance is discharged from its exhaust pipe 11. At this time, the exhaust gas purifying device 18 can oxidize and remove hydrocarbon (HC), nitrogen oxides (NO), and carbon monoxide (CO) in the exhaust gas by the oxidation catalyst 20. The particulate matter removing filter 21 traps the particulate matter contained in the exhaust gas. As a result, the purified exhaust gas can be discharged to the outside through the discharge port 30 on the downstream side. It should be noted that the trapped particulate matter is burned and removed (regenerated) by the regeneration device 22.

Incidentally, the regeneration by the regeneration device 22 is preferably performed less frequently in view of improvement of fuel efficiency. For this purpose, regeneration is preferably performed in a state in which a sufficient amount of the particulate matter has been trapped by the particulate matter removing filter 21. On the other hand, if regeneration is performed in a state in which the particulate matter is excessively deposited on the particulate matter removing filter 21, the temperature of the exhaust gas becomes excessively high (a burning temperature of the particulate matter becomes excessively high), it is concerned that the particulate matter removing filter 21 erodes.

Thus, in the first embodiment, the regeneration device 22 is configured to execute two types of regeneration processing, that is, the automatic regeneration processing of performing regeneration not on the basis of the operation by the operator by the determination of the controller 29 and the manual regeneration processing of notifying the operator to perform regeneration (of outputting a signal for notification) by the determination of the controller 29 and of performing regeneration on the basis of the operation by the operator. Specifically, by executing the processing shown in Fig. 4 by the controller 29, the two types of regeneration processing, that is, the automatic regeneration processing and the manual regeneration processing are configured to be performed.

In this case, the controller 29 processes the two types of processing which are the automatic regeneration processing and the manual regeneration processing in parallel. Namely, if the processing operation in Fig. 4 is started by starting (operating) the engine 10, the automatic regeneration processing (in other words, first clogging determination processing) from Step 1 and the manual regeneration processing (in other words, second clogging determination processing) from Step 11 are executed in parallel.

When a processing operation in Fig. 4 is started by start (operation) of the engine 10, at step 1, the engine rotational speed N is read in from the rotational sensor 23. Subsequently, at Step 2, a fuel injection quantity F is read in. The fuel injection quantity F can be calculated from an intake air amount detected by an airflow meter, not shown, provided on an intake side of the engine 10, and an engine rotational speed N, for example, and moreover, it can be also calculated from a control signal (fuel injection instruction) outputted from a controller 29 to a fuel injection device 14, for example. At Step 3, a trapping amount of particulate matter trapped by a particulate matter removing filter 21 is estimated on the basis of the engine rotational speed N and the fuel injection quantity F (PM trapping amount estimation). This trapping amount can be estimated by using a map and a calculation formula stored in a memory section 29A of the controller 29.

Namely, an emission per unit time is calculated by from the engine rotational speed N and the fuel injection quantity F by using the aforementioned map, and the emission amount is integrated so as to calculate a total emission amount Hm from a start of an operation to the current point of time. On the basis of the aforementioned formula 1, by subtracting an amount of the particulate matter (regeneration amount) J removed by regeneration until the current time from the total emission amount Hm, an estimated trapping amount H at the current time can be calculated.

At the subsequent Step 4, determination on whether or not to perform automatic regeneration (first clogging determination) is made on the basis of whether or not an estimated trapping amount H is a trapping amount threshold value T1 set in advance or more. If it is "YES" at this Step 4, that is, if the estimated trapping amount H is determined to be the trapping amount threshold value T1 or more, particulate matters are sufficiently trapped (deposited) on the particulate matter removing filter 21, and thus, the routine proceeds to Step 5, and automatic regeneration is started. Namely, at Step 5, a control signal of making that post-injection is outputted from the controller 29 to the fuel injection device 14 so as to raise a temperature of an exhaust gas, and the particulate matter trapped by the particulate matter removing filter 21 is burned and removed. Then, the routine returns to Start via Return, and the processing at Step 1 and after is repeated.

On the other hand, if it is "NO" at Step 4, that is, if it is determined that an estimated trapping amount H is smaller than a trapping amount threshold value T1, the particulate matter has not been sufficiently trapped by the particulate matter removing filter 21 yet. Therefore, in this case, the routine returns prior to Step 1, and processing at Step 1 and after is repeated.

On the other hand, if the processing operation in Fig. 4 is started by start (operation) of the engine 10, at Step 11, the pressures P1 and P2 are read in from the pressure sensors 24 and 25. That is, the pressure P1 on the upstream side and the pressure P2 on the downstream side of the particulate matter removing filter 21 are read in. Then, at the subsequent Step 12, a differential pressure $\Delta$P between the pressure P1 on the upstream side and the pressure P2 on the downstream side of the particulate matter removing filter 21 is calculated by the aforementioned formula 2.

At the subsequent Step 13, determination on whether or not notification is to be made to the operator to perform manual regeneration (second clogging determination) on the basis of whether the differential pressure $\Delta$P is at a differential pressure threshold value T2 set in advance or more. If it is "YES" at this Step 13, that is, if it is determined that the differential pressure $\Delta$P is at the differential pressure threshold value T2 or more, the particulate matter has been sufficiently trapped (deposited) on the particulate matter removing filter 21 and thus, the routine proceeds to Step 14, where manual regeneration is started. That is, at Step 14, an alarm signal for emitting an alarm sound, an alarm display or the like is outputted from the controller 29 to the alarm 27 and notifies the operator to perform manual regeneration.

At the subsequent Step 15, it is determined whether or not manual regeneration has been finished. This determination is made by operating an operating switch 28 by the operator and by determining whether or not a control signal to perform post-injection is outputted from the controller 29 to the fuel injection device 14. If it is determined to be "NO" at this Step 15, the routine returns to Step 15 again, and it is determined again whether or not the manual regeneration has been finished.

The determination at this Step 15 is made until the manual regeneration is finished, that is, until the post injection is made and it is determined to be "YES". If it is determined to be "YES" at Step 15, that is, if it is determined that the manual regeneration has been finished, the routine returns to Start via Return, and the processing at Step 11 and after is repeated.

On the other hand, if it is determined to be "NO" at Step 13, that is, if it is determined that the differential pressure ΔP is smaller than the differential pressure threshold value T2, since the particulate matter has not been sufficiently trapped by the particulate matter removing filter 21, the routine returns to before Step 11, and the processing at Step 11 and after is repeated.

As described above, according to the first embodiment, regeneration of the particulate matter removing filter 21 constituting the exhaust gas purifying device 18 can be performed properly with a simple configuration using a regeneration device 22. In this case, the regeneration device 22 is composed of the controller 29 at the center, the fuel injection device 14 and the rotational sensor 23 attached to the engine 10, the pressure sensors 24, 25 and an exhaust gas temperature sensor 26 attached to the exhaust gas purifying device 18, the alarm 27 and the operating switch 28 and the like attached in the cab 8.

Namely, the regeneration device 22 for regeneration the particulate matter removing filter 21 is configured to perform two kinds of processing which are automatic regeneration processing and manual regeneration processing by using these elements. Thus, regeneration of the particulate matter removing filter 21 can be stably performed. Specifically, even if it is determined to be "NO" at Step 4 since an error is caused between the trapping amount of the particulate matter estimated at Step 3 (estimated trapping amount H) and the actual trapping amount (true trapping amount) and automatic regeneration is not performed, for example, it is determined to be "YES" at Step 13, and an alarm is given to the operator to perform manual regeneration at Step 14. As a result, regeneration of the particulate matter removing filter 21 can be stably performed by using two-stage determinations, that is, the determination at Step 4 and the determination at Step 13, and stability and reliability of the regeneration device 22 can be ensured.

Fig. 5 is a characteristic diagram showing an example of time change in the estimated trapping amount H and the differential pressure ΔP according to the first embodiment. In Fig. 5, a solid line 31 indicates a time change in the estimated trapping amount H, while a broken line 32 indicates a time change in the differential pressure ΔP. A trapping amount boundary value X indicates erosion boundary value of the estimated trapping amount H which becomes a boundary on whether or not the filter 21 erodes if the particulate matter removing filter 21 is regenerated by the regeneration device 22. The differential pressure boundary value Y indicates an erosion boundary value of the differential pressure ΔP which becomes a boundary on whether or not the filter 21 erodes, if the filter 21 is regenerated by the regeneration device 22. In Fig. 5, for ease of understanding, the trapping amount boundary value X and the differential pressure boundary value Y are indicated so that they are located at the same positions in a Y-axis direction (vertical direction) of the characteristic diagram, that is, the trapping amount boundary value X and the differential pressure boundary value Y share the same correlation.

As obvious from Fig. 5, even if the estimated trapping amount H indicated by a solid line 31 does not reach the trapping amount threshold value T1 due to a reason such that an error is caused with respect to an actual trapping amount or the like, the differential pressure ΔP indicated by a broken line 32 reaches the differential pressure threshold value T2. As a result, manual regeneration can be performed before the trapping amount of the particulate matter trapped by the filter 21 becomes excessive. In other words, the manual regeneration processing can assist (aid) the automatic regeneration processing, and regeneration of the filter 21 can be executed stably.

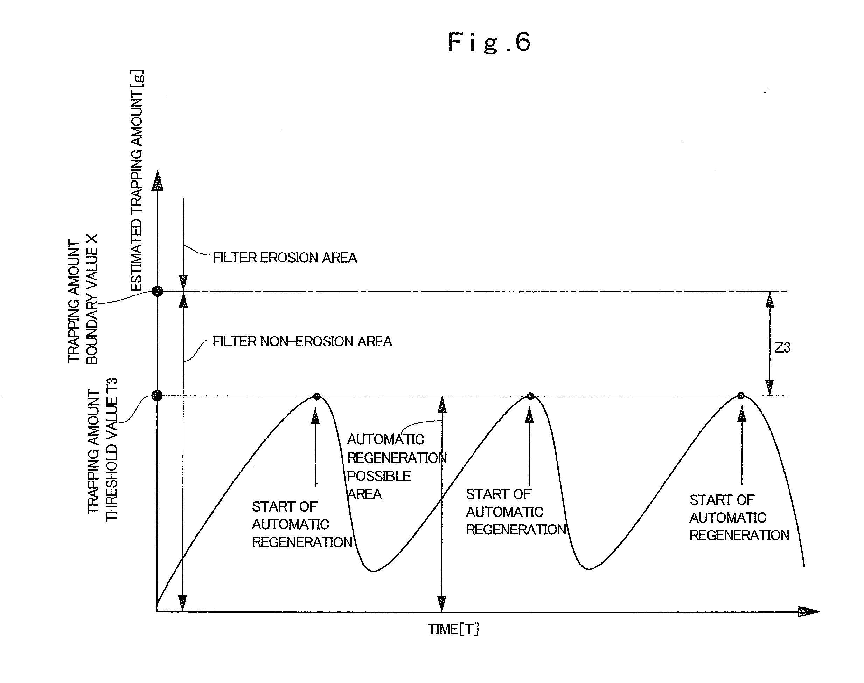

Therefore, in the first embodiment, since the manual regeneration processing can assist (aid) the automatic regeneration processing, even if the margin Z1 of the trapping amount threshold value T1 (difference Z1 between the trapping amount boundary value X and the trapping amount threshold value T1) used for determination of start of the automatic regeneration at Step 4 is set small (as compared with a margin Z3 of a trapping amount threshold value T3 in Fig. 6 which will be described later, for example), before the particulate matter is excessively deposited on the filter 21, notification can be made to the operator to perform the manual regeneration by processing at Steps 11 to 15. As a result, even if the margin Z1 of the trapping amount threshold value T1 is set small, erosion of the filter 21 in regeneration can be prevented.

Since the margin Z1 of the trapping amount threshold value T1 can be set small as described above, the automatic regeneration performed on the basis of the determination at Step 4 can be performed in a state in which a proper amount of the particulate matter has been trapped by the filter 21 and also, at a proper time (at a proper timing). Thus, the automatic regeneration can be made stably, and increase of a frequency of regeneration and deterioration of fuel efficiency as in the conventional art can be suppressed. As a result, reliability and stability of the exhaust gas purifying device 18 and fuel cost reduction of the hydraulic excavator 1 can be realized.

Moreover, at Step 4, determination is made on the basis of the estimated trapping amount H estimated from the engine rotational speed N and the fuel injection quantity F, and at Step 13, determination is made on the basis of the differential pressure ΔP of the filter 21. Thus, any determination made by the regeneration device 22 can be configured simply without requiring complicated calculations, and the filter 21 can properly regenerated with the simple regeneration device 22.

It should be noted that ash contained in engine oil and fuel not removed by regeneration and left is deposited on the filter 21. The deposited amount of this ash increases in the filter 21 with elapse of an operation time. Here, the determination of the manual regeneration processing at Step 13 is made on the basis of the differential pressure of the filter 21 and might be affected by deposition of the ash. However, since this determination at Step 13 is not determination on whether or not the automatic regeneration is to be made, a frequency of the automatic regeneration does not increase even if ash is deposited. On the other hand, in the determination of the manual regeneration processing, the margin Z2 with respect to the erosion boundary value (differential pressure boundary value Y) of the filter 21 can be set smaller than the margin Z1 with respect to the erosion boundary value (trapping amount boundary value X) for determination of the automatic regeneration processing. Thus, by setting the margin Z2 of the differential pressure threshold value T2 used at Step 13 small, an increase of the frequency of the manual regeneration can be suppressed even if the above-mentioned ash deposited amount increases.

According to the first embodiment, since the automatic regeneration processing and the manual regeneration processing are executed at the same time, determination on whether or not to execute the regeneration processing is made in two systems at the same time independently. Therefore, even if both of the margin Z1 of the trapping amount threshold value T1 of the automatic regeneration processing and the margin Z2 of the differential pressure threshold value T2 of the manual regeneration processing are set small, it can be configured that regeneration on the basis of either one of the two types of processing is executed before the particulate matter is excessively deposited on the filter 21. As a result, setting of both of the margin Z1 of the trapping amount threshold value T1 and the margin Z2 of the differential pressure threshold value T2 small and suppression of erosion of the filter 21 can be both realized at a high level.

According to the first embodiment, since the trapping amount threshold value T1 used at Step 4 is set to a value smaller than the trapping amount boundary value X allowing for an error that can be caused between the estimated trapping amount H and the actual trapping amount, erosion of the filter 21 when the automatic regeneration is performed can be prevented. In this case, since the automatic regeneration processing can be assisted (aided) by the manual regeneration processing, as compared with the margin Z3 shown in Fig. 6, the margin Z1 of the trapping amount threshold value T1 with respect to the trapping amount boundary value X can be set small.

This point will be described by referring to Fig. 6 added to the aforementioned Fig. 5. This Fig. 6 is a characteristic diagram showing an example of a time change in the estimated trapping amount according to a first comparative example. This first comparative example is configured to make determination on whether or not to perform regeneration only on the basis of the estimated trapping amount. In the case of this configuration, since there is no assistance by the manual regeneration in which the determination is made on the basis of the differential pressure as in the first embodiment, the margin Z3 of the trapping amount threshold value T3 with respect to the trapping amount boundary value X needs to be set large in order that erosion does not occur even if a large error is caused in the estimated trapping amount. Thus, there is a concern that a frequency of regeneration increases, and fuel efficiency deteriorates.

On the other hand, according to the first embodiment, since the automatic regeneration processing can be assisted by the manual regeneration processing, the margin Z1 of the trapping amount threshold value T1 with respect to the trapping amount boundary value X can be set small (Z1 < Z3). AS a result, the frequency of the automatic regeneration can be reduced, and fuel efficiency can be improved.

Moreover, according to the first embodiment, since the differential pressure threshold value T2 used at Step 13 is set to a value smaller than the differential pressure boundary value Y allowing for an error based on detection accuracy of the pressure sensors 24 and 25 for acquiring the differential pressures, erosion of the filter 21 when the manual regeneration is performed can be prevented. In this case, the margin Z2 of the differential pressure threshold value T2 with respect to the differential pressure boundary value Y is set on the basis of an error based on the detection accuracy of the pressure sensors 24 and 25. Thus, as compared with a configuration in which the determination on whether or not to perform the automatic regeneration is made on the basis of the differential pressure and a configuration in which the trapping amount is estimated from the differential pressure, the margin Z2 can be set small.

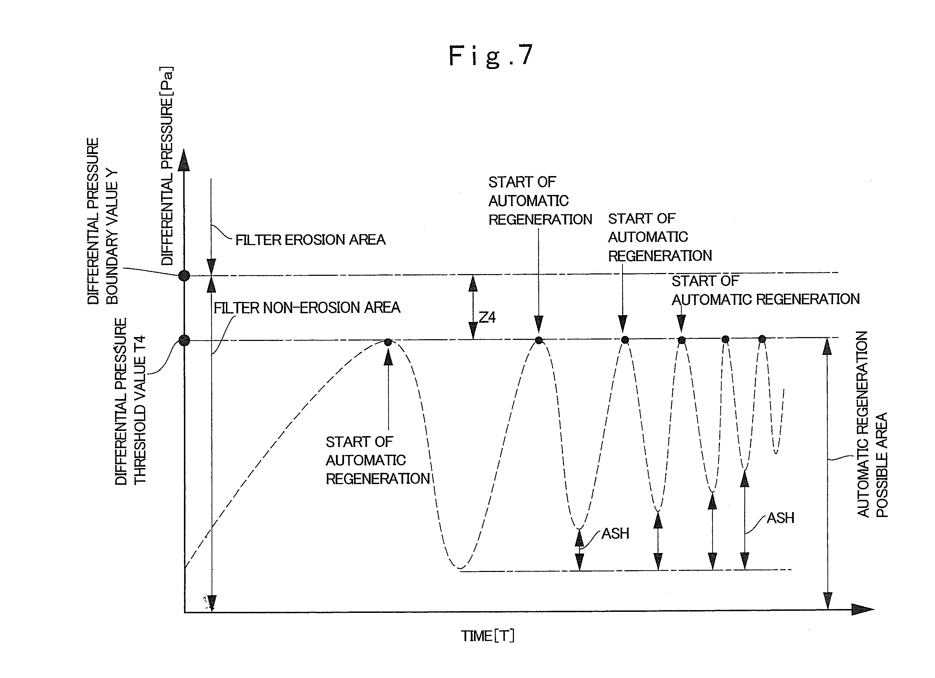

This point will be described by referring to Fig. 7 added to the aforementioned Fig. 5. This Fig. 7 is a characteristic diagram showing an example of a time change in the differential pressure according to a second comparative example. This second comparative example is configured to make determination on whether or not to perform regeneration processing only on the basis of the differential pressure. In the case of this configuration, since it is not configured to execute two types of regeneration processing, that is, the manual regeneration processing and the automatic regeneration processing as in the first embodiment, a margin Z4 of the differential pressure threshold value T4 with respect to the differential pressure boundary value Y needs to be set larger than the margin Z2 in the case of two types of regeneration processing. Thus, there is a concern that a frequency of regeneration increases, fuel efficiency deteriorates and the like.

Moreover, in the case of a configuration in which it is determined whether or not to perform regeneration only on the basis of the differential pressure of the filter 21, a component of ash (ash content) deposited on the filter 21 with elapse of the operation time and not burned or removed even by regeneration increases. If a large amount of the ash content remains in the filter 21 as above, even though an amount of the particulate matter trapped by the filter 21 is small, the differential pressure reaches the differential pressure threshold value T4, and there is a concern that regeneration is performed. Thus, from this point too, there is a concern that a frequency of regeneration increases, fuel efficiency deteriorates and the like.

On the other hand, according to the first embodiment, determination of the automatic regeneration processing is made on the basis of the estimated trapping amount H estimated from the engine rotational speed N, the fuel injection quantity F and the like without using the differential pressure ΔP. Thus, the automatic regeneration processing can make ash not removed even by the regeneration less influential, and an increase in the frequency of the automatic regeneration can be suppressed. Moreover, according to the first embodiment, since two types of regeneration processing, that is, the manual regeneration processing and the automatic regeneration processing are configured to be executed, it is only necessary to consider an error based on detection accuracy of the pressure sensors 24 and 25 for the margin Z2 of the differential pressure threshold value T2 with respect to the differential pressure boundary value Y, and this margin Z2 can be set small (Z2 < Z4). Thus, a frequency of the manual regeneration can be also reduced.

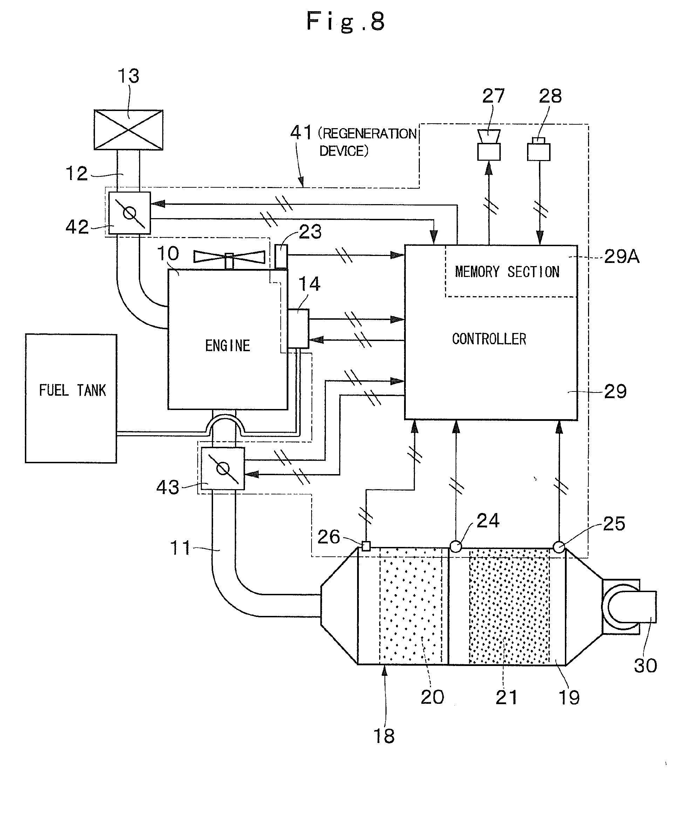

Next, Fig. 8 shows a second embodiment of the present invention. A feature of the second embodiment is that the automatic regeneration is configured to be performed not by post-injection but by driving at least one of throttle valves, that is, an intake throttle valve provided on the intake side of the engine and an exhaust throttle valve provided on the exhaust side in a direction of throttling its passage. It should be noted that in the second embodiment, component elements that are identical to those in the foregoing first embodiment will be simply denoted by the same reference numerals to avoid repetitions of similar explanations.

In the figure, designated at 41 is a regeneration device for regeneration the particulate matter removing filter 21 by burning the particulate matter trapped by the filter 21. This regeneration device 41 includes the fuel injection device 14, an intake throttle valve 42, an exhaust throttle valve 43, the rotational sensor 23, the pressure sensors 24 and 25, the exhaust gas temperature sensor 26, the alarm 27, the operating switch 28, and the controller 29. In order to perform the automatic regeneration by using this regeneration device 41, the particulate matter deposited on the filter 21 is burned and removed by driving at least one of the throttle valves, that is, the intake throttle valve 42 and the exhaust throttle valve 43 in a direction of throttling its passage. On the other hand, in order to perform the manual regeneration, the particulate matter deposited on the filter 21 is burned and removed by performing post-injection by the fuel injection device 14 manually by the operator upon receipt of an alarm sound or the like from the alarm 27.

The intake throttle valve 42 is provided on the intake pipe 12 side of the engine 10, and the intake throttle valve 42 constitutes the regeneration device 41 for regeneration the particulate matter removing filter 21. Here, the intake throttle valve 42 is usually held in a valve open state (to an opening degree corresponding to the fuel injection quantity F or a full open state, for example) by a control signal from the controller 29. On the other hand, in order to perform the automatic regeneration, the intake throttle valve 42 is driven in a direction of throttling the passage by a control signal from the controller 29.

As a result, the intake throttle valve 42 throttles an intake air amount so that an air/fuel ratio between air and fuel becomes richer, for example. At this time, in the combustion chamber of the engine 10, by burning the fuel whose air/fuel ratio tends to be richer, the temperature of the exhaust gas exhausted to the exhaust pipe 11 side rises, and the particulate matter trapped by the filter 21 can be burned and removed.

The exhaust throttle valve 43 is provided on the exhaust pipe 11 side of the engine 10, and the exhaust throttle valve 43 also constitutes the regeneration device 41 for performing the regeneration of the particulate matter removing filter 21. Here, the exhaust throttle valve 43 is usually held in the full open state by a control signal from the controller 29. On the other hand, in order to perform the automatic regeneration, the exhaust throttle valve 43 is driven in a direction of throttling the passage by a control signal from the controller 29, and control of throttling its opening degree is executed.

As a result, the exhaust throttle valve 43 gives a back pressure to the engine 10 by throttling a flow rate of the exhaust gas flowing through the exhaust pipe 11 and increases a load of the engine 10. At this time, the controller 29 increases the fuel injection quantity F by the fuel injection device 14 of the engine 10 in correspondence with the load. As a result, the temperature of the exhaust gas rises, and the particulate matter trapped by the filter 21 can be burned and removed.

The second embodiment is to perform the automatic regeneration by driving at least one of the intake throttle valve 42 and the exhaust throttle valve 43 as described above in the direction of throttling the passage, and its basic action is not particularly different from that according to the first embodiment described above.

Particularly, in the case of the second embodiment, since the automatic regeneration is performed by driving at least one of the intake throttle valve 42 and the exhaust throttle valve 43 in the direction of throttling the passage, as compared with the automatic regeneration performed by the post-injection as in the first embodiment, the automatic regeneration can be performed at a low temperature. As a result, durability of the filter 21 can be improved.

It should be noted that in each of the aforementioned embodiments, the processing at Step 4 shown in Fig. 4 is a specific example of the automatic regeneration determining unit which is a constituent requirement of the present invention, and the processing at Step 13 is a specific example of the manual regeneration determining unit.

Moreover, in each of the aforementioned embodiments, the example in which the determination on whether or not to perform the automatic regeneration is made on the basis of the engine rotational speed N, the fuel injection quantity F, and the exhaust gas temperature was described. However, the present invention is not limited to that, and the determination on whether or not to perform the automatic regeneration may be made not only by the engine rotational speed N, the fuel injection quantity F, and the exhaust gas temperature but by using a temperature of each portion such as a filter or the like, a state amount such as an engine load or the like (state amount indicating an operation state) and the like in combination, for example.

In addition, in each of the aforementioned embodiments, the example in which the exhaust gas purifying device 18 is constituted by the oxidation catalyst 20 and the particulate matter removing filter 21 was described. However, the present invention is not limited to that, and other than the oxidation catalyst and the particulate matter removing filter, a urea injection valve, a selective reduction catalyst device and the like may be used in combination, for example.

Moreover, in each of the aforementioned embodiments, the example in which the exhaust gas purifying device 18 is mounted on the small-sized hydraulic excavator 1 was described. However, the construction machine provided with the exhaust gas purifying device according to the present invention is not limited to that and may be applied to a hydraulic excavator of a medium size or more, for example. Moreover, the present invention can be also widely applied to the construction machine such as a hydraulic excavator provided with a wheel-type lower traveling structure, a wheel loader, a forklift, a hydraulic crane and the like.

DESCRIPTION OF REFERENCE NUMERALS

| 1: | Hydraulic excavator (Construction machine) |
| 2: | Lower traveling structure (Vehicle body) |
| 4: | Upper revolving structure (Vehicle body) |
| 10: | Engine |
| 14: | Fuel injection device |
| 18: | Exhaust gas purifying device |
| 21: | Particulate matter removing filter (Filter) |
| 22, 41: | Regeneration device |
| 24, 25: | Pressure sensor |
| 26: | Exhaust gas temperature sensor |
| 27: | Alarm |
| 28: | Operating switch |
| 29: | Controller |

**Claims**

1. A construction machine comprising:

a vehicle body (2, 4) which an operator gets on board;
an engine (10) mounted on said vehicle body (2, 4);
an exhaust gas purifying device (18) having a filter provided on an exhaust side of said engine (10) and trapping particulate matter in an exhaust gas exhausted from said engine (10); and
a regeneration device (22, 41) for regenerating said filter (21) by burning the particulate matter trapped by said filter (21), **characterized in that**:

said regeneration device (22, 41) is provided with automatic regeneration determining unit for determining whether or not said regeneration is to be automatically performed and manual regeneration determining unit for determining whether or not notification is to be made to said operator to manually perform regeneration;
said automatic regeneration determining unit estimates a trapping amount of the particulate matter trapped by said filter (21) on the basis of at least a rotational speed (N) of said engine (10) and a fuel injection quantity (F) and determines whether or not automatic regeneration is to be performed on the basis of whether the estimated trapping amount (H) is at a trapping amount threshold value (T1) set in advance or more; and
said manual regeneration determining unit determines whether or not a signal for notifying manual regeneration is to be outputted on the basis of whether a differential pressure ($\Delta P = P1 - P2$) which is a difference between a pressure (P1) on an inlet side and a pressure (P2) on an outlet side of said filter (21) is at a differential pressure threshold value (T2) set in advance or more.

2. The construction machine according to claim 1, wherein assuming that an erosion boundary value of an estimated trapping amount which becomes a boundary at which said filter (21) erodes or not is a trapping amount boundary value (X), said trapping amount threshold value (T1) is set to a value smaller than said trapping amount boundary value (X) allowing for an error that can be caused between said estimated trapping amount (H) and an actual trapping amount.

3. The construction machine according to claim 1, wherein assuming that an erosion boundary value of a differential pressure which becomes a boundary at which said filter (21) erodes or not is a differential pressure boundary value (Y), said differential pressure threshold value (T2) is set to a value smaller than said differential pressure boundary value (Y)

allowing for an error based on detection accuracy of a pressure sensor (24, 25) for obtaining said differential pressure ($\Delta P$).

4. The construction machine according to claim 1, wherein said regeneration device (22, 41) is configured to execute automatic regeneration processing by said automatic regeneration determining unit and manual regeneration processing by said manual regeneration determining unit in parallel.

5. The construction machine according to claim 1, wherein
the automatic regeneration on the basis of the determination of said automatic regeneration determining unit is configured to burn said particulate matter by performing fuel injection for regeneration by a fuel injection device upon receipt of a signal outputted from said regeneration device; and
the manual regeneration on the basis of the determination of said manual regeneration determining unit is configured to burn said particulate matter by performing fuel injection for regeneration by the fuel injection device upon receipt of a signal outputted from said regeneration device by an operation by an operator on the basis of an output of a signal notifying the manual regeneration.

6. The construction machine according to claim 1, wherein
the automatic regeneration on the basis of the determination of said automatic regeneration determining unit is configured to burn said particulate matter by driving at least either one of an intake throttle valve provided on an intake side of said engine and an exhaust throttle valve provided on an exhaust side in a direction of throttling a passage of said throttle valve upon receipt of the signal outputted from said regeneration device; and
the manual regeneration on the basis of the determination of said manual regeneration determining unit is configured to burn said particulate matter by performing fuel injection for regeneration by a fuel injection device upon receipt of a signal outputted from said regeneration device by an operation by an operator on the basis of an output of a signal for notifying the manual regeneration.

Fig.1

EP 2 784 278 A1

Fig.2

# Fig.3

Fig.4

# Fig.5

ESTIMATED TRAPPING AMOUNT H[g]

TRAPPING AMOUNT
BOUNDARY VALUE X

TRAPPING AMOUNT
THRESHOLD VALUE T1

FILTER EROSION AREA

FILTER NON-EROSION AREA

$\Delta P$

H

31
(TIME CHANGE IN
AN ESTIMATED
TRAPPING AMOUNT H )

START OF
AUTOMATIC
REGENERATION

Z2

Z1

AUTOMATIC
REGENERATION
POSSIBLE AREA

START OF
MANUAL REGENERATION

32
(TIME CHANGE IN
A DIFFERENTIAL
PRESSURE $\Delta P$)

DIFFERENTIAL PRESSURE $\Delta P$[Pa]

DIFFERENTIAL PRESSURE
BOUNDARY VALUE Y

DIFFERENTIAL PRESSURE
THRESHOLD VALUE T2

TIME[T]

# Fig.6

Fig.7

# Fig.8

## INTERNATIONAL SEARCH REPORT

| International application No. |
| --- |
| PCT/JP2012/077358 |

A. CLASSIFICATION OF SUBJECT MATTER
*F01N3/023*(2006.01)i, *F02D45/00*(2006.01)i, *B01D46/42*(2006.01)n

According to International Patent Classification (IPC) or to both national classification and IPC

B. FIELDS SEARCHED

Minimum documentation searched (classification system followed by classification symbols)
F01N3/023, F02D45/00, B01D46/42

Documentation searched other than minimum documentation to the extent that such documents are included in the fields searched
Jitsuyo Shinan Koho          1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2011-37334 A  (Hitachi Construction Machinery Co., Ltd.), 24 February 2011 (24.02.2011), paragraphs [0055] to [0056], [0065] to [0066]; fig. 1 to 5 (Family: none) | 1-6 |
| Y | JP 2003-155916 A  (Hino Motors, Ltd.), 30 May 2003 (30.05.2003), paragraphs [0041] to [0042], [0068], [0070]; fig. 3 (Family: none) | 1-6 |
| A | JP 2003-83035 A  (Mitsubishi Motors Corp.), 19 March 2003 (19.03.2003), entire text; all drawings (Family: none) | 1-6 |

☐ Further documents are listed in the continuation of Box C.　　☐ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>　　03 December, 2012 (03.12.12) | Date of mailing of the international search report<br>　　18 December, 2012 (18.12.12) |
| --- | --- |
| Name and mailing address of the ISA/<br>　　Japanese Patent Office | Authorized officer |
| Facsimile No. | Telephone No. |

Form PCT/ISA/210 (second sheet) (July 2009)

## REFERENCES CITED IN THE DESCRIPTION

**Patent documents cited in the description**

- JP 2010065577 A
- JP HEI1113455 A
- JP 2002332824 A
- JP HEI9280036 A
- JP HEI711935 A